# FASCICULE DE BREVET EUROPEEN

(11) **EP 2 461 446 B1**
(45) Date de publication et mention de la délivrance du brevet: **06.01.2016**
(21) Numéro de dépôt: 11354059.5
(22) Date de dépôt: 27.10.2011
(51) Int. Cl.: H02G 11/02, H01H 3/16

(54) **Dispositif d'enroulement pour fil électrique**
Aufrollvorrichtung für Stromkabel
Winding device for electric wire

(30) Priorité: 02.12.2010 FR 1004696
(43) Date de publication de la demande: 06.06.2012
(73) Titulaire: Schneider Electric Industries SAS, 92500 Rueil-Malmaison (FR)
(72) Inventeur: Perrin, Alain, 38050 Grenoble Cedex 09 (FR); Chevalley, Christian, 38050 Grenoble Cedex 09 (FR)
(74) Mandataire: Picard, Laurent

(56) Documents cités:
- DE-U- 1 971 096
- DE-U1- 9 105 046
- JP-A- 8 083 640
- JP-A- 2003 244 832

## Description

### DOMAINE TECHNIQUE DE L'INVENTION

L'invention est relative à un dispositif d'enroulement pour fil électrique comprenant un tambour monté en rotation autour d'un premier axe de rotation solidaire d'un bâti. Un fil électrique enroulé sur le tambour comporte une première extrémité mobile destinée à être enroulée et déroulée avec le fil et une seconde extrémité. La seconde extrémité est destinée à être connectée soit à au moins une charge électrique soit à un réseau d'alimentation, via un bloc de connexion. Des moyens interrupteurs sont destinés à couper une liaison électrique entre la première extrémité du fil électrique et le bloc de connexion.

### ETAT DE LA TECHNIQUE

Les dispositifs d'enroulement pour fil électrique comportent de manière connue un tambour sur lequel est enroulé le câble électrique. Le tambour est généralement monté sur un axe de rotation fixé à un socle ou un bâti.

A titre d'exemple de fonctionnement, le déroulement ou dévidage du câble se fait généralement en tirant directement sur le fil électrique. En outre, l'enroulement du fil sur le tambour peut être réalisé par plusieurs solutions. Une solution consiste par exemple à équiper l'enrouleur manuel de moyens élastiques de rappel. Ces moyens élastiques de rappel sont armés lorsque le câble est déroulé du tambour. Une seconde solution consiste à actionner manuellement la rotation du tambour pour enrouler le câble électrique sur le tambour. Le tambour comporte généralement une poignée plus ou moins ergonomique fixée directement sur une face dudit tambour.

Des dispositifs d'enroulement à tambour connus peuvent comporter des moyens de sécurité électrique.

En effet, tel que décrit dans les brevets US4154324 et US5101082, le dispositif comporte des moyens interrupteurs aptes à déconnecter le dispositif à enroulement de la ligne électrique pendant les phases de déroulement ou d'enroulement du fil électrique sur le tambour.

DE 1971096 U divulgue un dispositif selon le préambule de la revendication 1.

D'autres brevets tels que notamment le brevet US5855262 comportent des moyens de sécurité thermique. Un échauffement trop important du fil enroulé sur le tambour pouvant provoquer par exemple un incendie, les interrupteurs sont aptes à déconnecter le dispositif à enroulement de la ligne électrique d'alimentation en cas de surchauffe. Il s'agit d'un moyen de correction du défaut et non de prévention. En outre, en cas d'interruption de l'alimentation par les interrupteurs, l'inconvénient reste la discontinuité de service pour un utilisateur.

En l'absence de moyen de sécurité particulier, l'utilisateur n'est pas protégé contre un échauffement trop important du dispositif d'enroulement. C'est pourquoi, à défaut de solution technique efficace, certains constructeurs, pour éviter tout échauffement excessif du dispositif d'enroulement, préconisent un déroulement complet du fil électrique du tambour avant une utilisation du dispositif d'enroulement.

La solution présentée dans le document DE 1971096 décrit des moyens de sécurité obligeant un déroulement complet du fil avant utilisation. Cependant, cette solution présente l'inconvénient d'être relativement peu fiable compte tenu qu'il est relativement facile à l'utilisateur à la shunter.

### EXPOSE DE L'INVENTION

L'invention vise donc à remédier aux inconvénients de l'état de la technique, de manière à proposer un dispositif d'enroulement pour fil électrique comportant des moyens sécurisés de distribution électrique.

Les moyens interrupteurs du dispositif d'enroulement pour fil électrique selon l'invention comportent un contact fixe solidaire du bâti et connecté au bloc de connexion et un contact mobile monté en rotation autour d'un second axe de rotation solidaire du tambour et étant connecté au fil électrique. Une rotation du contact mobile entre au moins une position de fonctionnement déconnectée et une position de fonctionnement connectée au contact fixe est réalisée par une traction sur le fil électrique.

Avantageusement, le second axe de rotation est décentré par rapport au premier axe de rotation.

Selon un mode de développement de l'invention, le contact mobile comporte un corps apte à pivoter autour du second axe de rotation, la surface extérieure dudit corps comportant un point de connexion décentrée du fil électrique. Une traction exercée sur ledit fil en fin de déroulement créant un couple de rotation sur le corps et entrainant la rotation du contact mobile de la position de fonctionnement déconnectée à la position de fonctionnement connectée.

De préférence, le corps du contact mobile comporte au moins deux zones de bossages destinées à coopérer respectivement avec un moyen de blocage pour le maintien dudit contact mobile dans une des positions de fonctionnement.

De préférence, le moyen de blocage comporte un ergot destiné à coopérer avec les zones de bossage du corps du contact mobile pour son maintien dans une position de fonctionnement.

Avantageusement, le moyen de blocage comporte un moyen élastique développant une force de poussée pour plaquer ledit ergot contre une zone de bossage.

Selon un mode particulier de réalisation, le contact mobile comporte un doigt sur lequel au moins deux zones de contact électrique sont disposées parallèlement le long du doigt, ledit doigt étant perpendiculaire au second axe de rotation.

Selon un mode particulier de réalisation, le contact fixe comporte un étrier en forme de U ayant des branches comprenant au moins deux zones de contact, lesdites zones de contact étant destinées à venir collaborer avec lesdites au moins deux zones de contact électrique du doigt dans la position de fonctionnement connectée.

Avantageusement, les branches de l'étrier en forme de U sont asymétriques.

### BREVE DESCRIPTION DES FIGURES

D'autres avantages et caractéristiques ressortiront plus clairement de la description qui va suivre d'un mode particulier de réalisation de l'invention, donné à titre d'exemple non limitatif, et représenté aux dessins annexés sur lesquels :
- La figure 1 représente une vue éclatée en perspective d'un dispositif d'enroulement selon un mode préférentiel de réalisation de l'invention ;

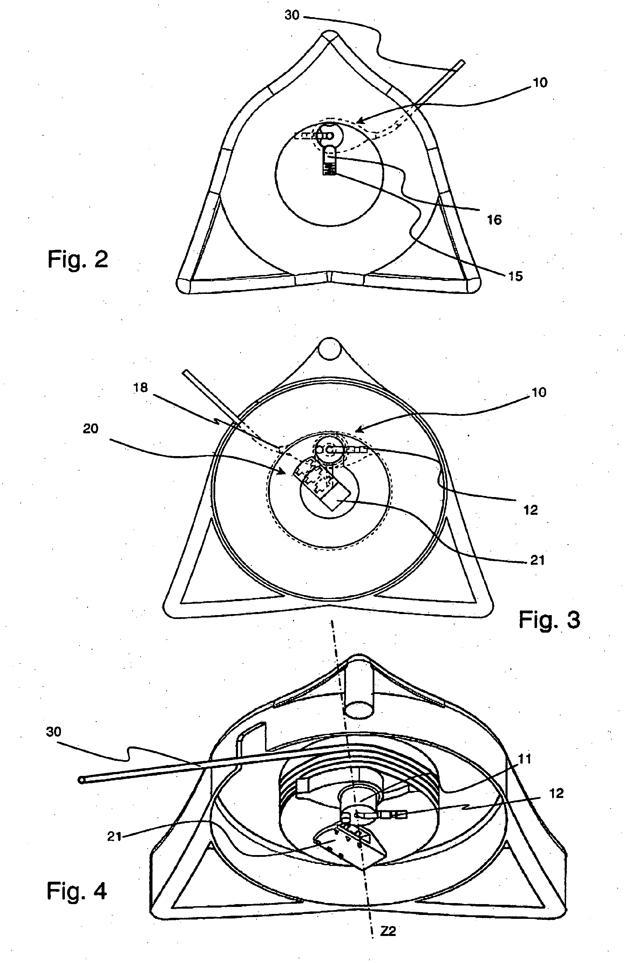

- Les figures 2, 3 et 4 représentent le dispositif d'enroulement selon la figure 1 dans une première position de fonctionnement ;

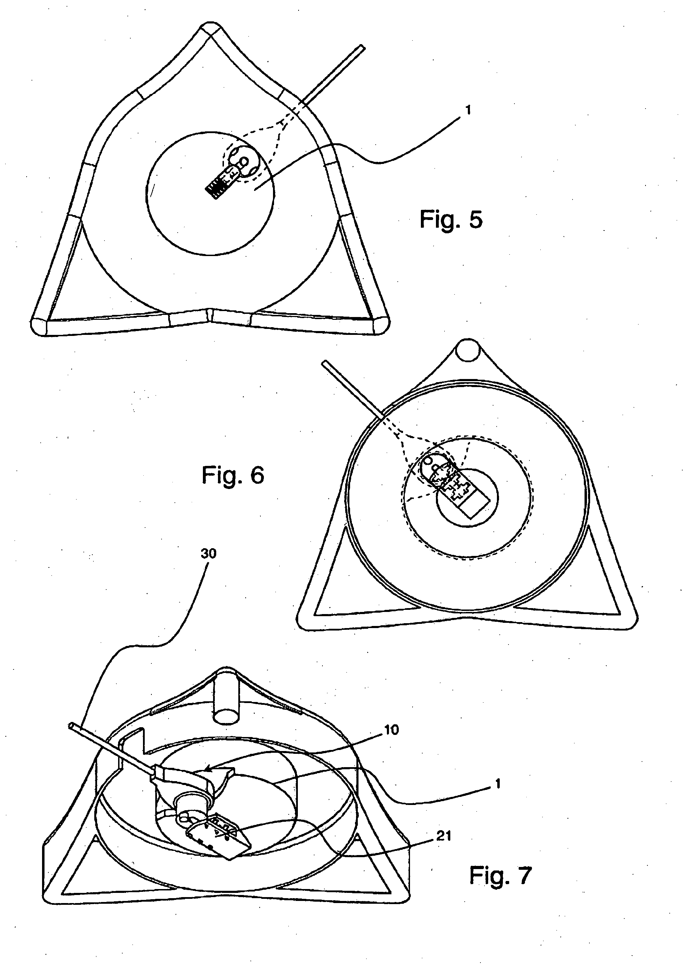

- Les figures 5, 6 et 7 représentent le dispositif d'enroulement selon la figure 1 dans une seconde position de fonctionnement ;
- Les figures 8A - 8D représentent des vues de détail du corps du contact mobile d'un dispositif d'enroulement selon l'invention ;
- La figure 9 représente une vue de détail des contacts fixe et mobile d'un dispositif d'enroulement selon l'invention ;
- La figure 10 représente une variante de réalisation du dispositif d'enroulement selon la figure 1.

### DESCRIPTION DETAILLEE D'UN MODE DE REALISATION

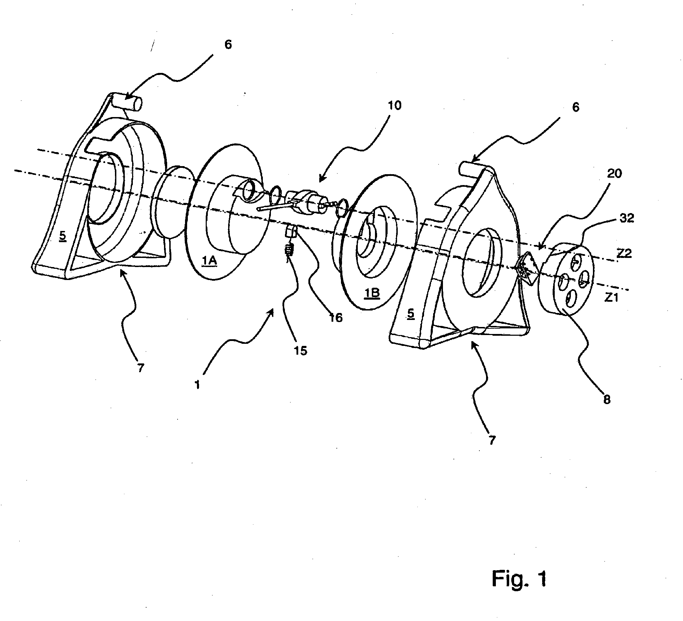

Selon un mode de réalisation de l'invention tel que représenté sur la figure 1, le dispositif d'enroulement pour fil électrique comporte un tambour 1 monté en rotation sur un bâti 5. Le tambour 1 est monté en rotation autour d'un premier axe de rotation Z1 solidaire du bâti 5. Le tambour est constitué de deux flasques 1A, 1 B assemblées face contre face.

Un fil électrique 30 souple est enroulé sur le tambour 1. Le fil électrique 30 souple comporte une première extrémité destinée à être déroulée et enroulée avec le fil et une seconde extrémité solidaire. De préférence, la seconde extrémité est destinée à être connectée à un réseau électrique d'alimentation et une autre extrémité destinée à être connectée à un ou plusieurs appareillages électriques ou charges.

Selon un premier mode particulier de réalisation tel que représenté sur la figure 1, la première extrémité du fil électrique 30 souple est destinée à être connectée au réseau d'alimentation électrique par l'intermédiaire d'une prise électrique non représentée. La prise électrique est de préférence une prise mâle. La seconde extrémité est destinée à être raccordée à une ou plusieurs charges. La seconde extrémité est de préférence connectée aux charges via des prises électriques femelles d'un bloc de connexion 8 du dispositif d'enroulement. Selon ce mode particulier de réalisation, le bâti 5 est constitué d'une pièce moulée en deux parties assemblées. Le bâti 5 comporte au moins une zone d'assise, une zone de fixation du tambour 1 et une zone d'accrochage 6. La zone d'assise 7 est destinée à reposer sur le sol et comporte au moins deux surfaces d'appui distantes l'une de l'autre et reliées entre elles. La zone de fixation du tambour autorise un emboitement dudit tambour 1. Le premier axe de rotation Z1 est matérialisé soit par un axe indépendant fixé sur le bâti, soit par une partie de la pièce moulée.

Selon un autre mode particulier de réalisation non représenté, la première extrémité du fil électrique 30 souple est raccordée à une charge. La seconde extrémité du fil électrique 30 souple est raccordée au réseau électrique d'alimentation. L'alimentation électrique du dispositif d'enroulement est alors établie par un fil électrique directement raccordé à un contact fixe 20 du bloc de connexion 8. Selon ce second mode particulier de réalisation non représenté, le tambour 1 peut être monté dans un bâti faisant partie d'une borne de distribution électrique destinée par exemple à la recharge des véhicules électriques. Le tambour est inclus dans un volume et n'est pas directement accessible par un utilisateur. Ce dernier a accès à la première extrémité du fil électrique 30 enroulé sur le tambour, extrémité du fil comportant alors une prise électrique destinée à alimenter le véhicule électrique directement ou via son cordon de recharge. Selon ce mode de réalisation, la seconde extrémité du fil électrique 30 souple est destinée à être connectée directement au réseau d'alimentation électrique. Cette connexion est réalisée à l'intérieur par exemple de la borne de distribution, via le bloc de connexion 8 totalement inaccessible à l'utilisateur.

Le dispositif d'enroulement comporte des moyens interrupteurs aptes à couper la liaison électrique entre la première extrémité du fil électrique 30 et le bloc de connexion 8.

Selon les modes de réalisation de l'invention, les moyens interrupteurs comportent un contact fixe 20 solidaire du bloc de connexion 8 destiné à être connecté au réseau électrique d'alimentation via un fil électrique ou à au moins une charge via une prise de courant.

En outre, les moyens interrupteurs comportent un contact mobile 10 connecté au fil électrique 30 souple, ledit contact étant monté en rotation autour d'un second axe de rotation Z2 solidaire du tambour. Le second axe de rotation Z2 est décentré par rapport au premier axe de rotation Z1. Selon un mode de réalisation de l'invention, le second axe de rotation Z2 est placé de préférence au niveau de la périphérie du tambour 1.

La rotation du contact mobile 10 est réalisée entre au moins deux positions de fonctionnement. Dans une première position de fonctionnement, le contact mobile 10 est connecté au contact fixe 20. Dans au moins une seconde position de fonctionnement, le contact mobile 10 est déconnecté du contact fixe 20.

Comme représenté sur la figure 1, le contact mobile comporte un corps apte à pivoter autour du second axe de rotation Z2. La surface extérieure dudit corps 11 comportant un point de connexion 18 du fil électrique 30 souple. Le point de connexion 18 est décentré par rapport au second axe de rotation Z2.

Le corps 11 du contact mobile 10 comporte au moins deux zones de bossage 14 destinées à coopérer respectivement avec un moyen de blocage pour le maintien dudit contact mobile dans une des positions de fonctionnement. A titre d'exemple de réalisation, le corps 11 comporte deux zones de bossage externe et une zone de bossage centre.

Le positionnement du moyen de blocage dans la zone centrale correspond à la première position de fonctionnent où le contact mobile 10 est en contact avec le contact fixe 20.

Le positionnement du moyen de blocage dans une des deux zones externes correspond à la deuxième position de fonctionnent où le contact mobile 10 n'est pas en contact avec le contact fixe 20.

Selon un mode de réalisation tel que représenté sur la figure 1, le moyen de blocage comporte un ergot 16 destiné à coopérer avec les zones de bossage 14 du corps 11 du contact mobile 10 pour son maintien dans une position de fonctionnement. En outre, le moyen de blocage comporte un moyen élastique 15 développant une force de poussée pour plaquer ledit ergot 16 contre une des zones de bossage 14. A titre d'exemple de réalisation, le moyen élastique 15 est de préférence un ressort hélicoïdal travaillant en compression.

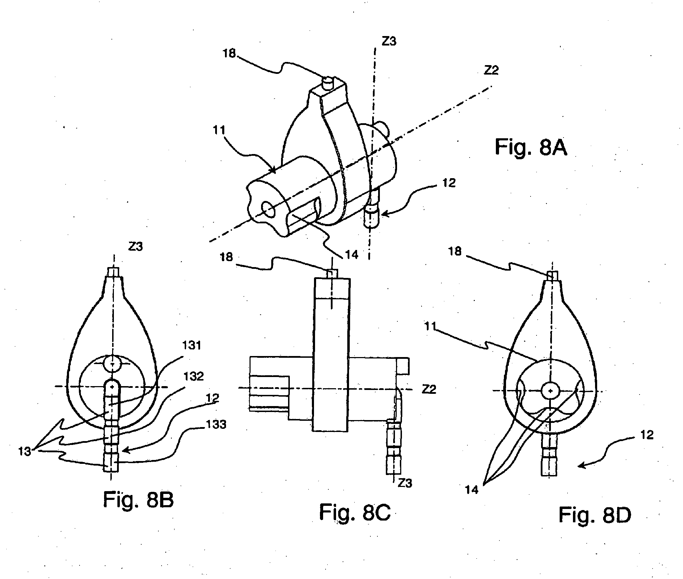

Selon un mode de réalisation tel que représenté sur les figures 8A - 8D, le contact mobile 10 comporte au moins deux zones 131, 132 de contact électrique disposées sur un doigt de contact 12. A titre d'exemple de réalisation, le contact mobile 10 comporte trois zones de contact 131, 132, 133 destinées à être connectées respectivement à la terre, au neutre et la phase. Les zones de contact 131, 132, 133 se présentent alors sous la forme d'anneaux repartis parallèlement le long du doigt.

Ledit doigt comporte un axe longitudinal Z3 perpendiculaire avec le second axe de rotation Z2. A titre d'exemple de réalisation, le doigt comporte une section cylindrique. Un conducteur électrique relie les zones de contact électrique 13 au point de connexion 18 du fil électrique 30 souple. A titre d'exemple, ledit conducteur est surmoulé et est placé à l'intérieur du corps 11 du contact mobile 10.

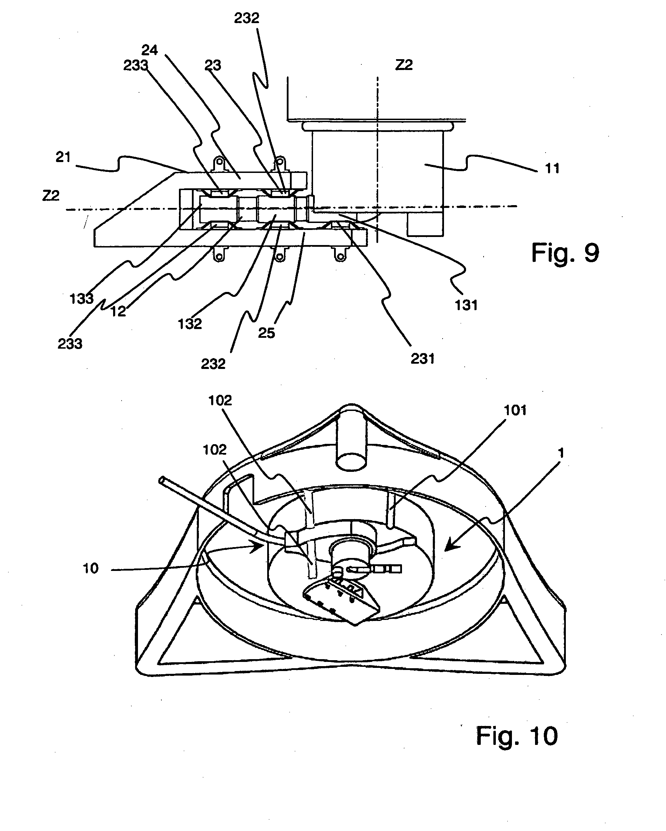

Le contact fixe 20 comporte aussi au moins deux zones de contact 231, 232 destinées à venir collaborer avec lesdites au moins deux zones 131, 132 de contact électrique du contact mobile 10 dans la première position de fonctionnement. A titre d'exemple de réalisation, lesdites zones de contact 231, 232, 233 sont disposées à l'intérieur d'un étrier 21. Comme représenté sur la figure 9, l'étrier a alors une forme de U comportant deux branches 24, 25. Les zones de contact 231, 232, 233 sont alors réparties sur les faces internes de l'étrier 21 et sont reliées soit au réseau d'alimentation par un fil électrique soit à au moins une charge par l'intermédiaire d'une prise électrique sur le bloc 8. A titre d'exemple de réalisation, les branches 24, 25 de l'étrier en forme de U sont asymétriques afin de laisser un espace suffisant à la circulation du doigt lors de l'enroulement ou déroulement, la branche 24 la plus proche du tambour mobile doit avoir une longueur permettant le passage du doigt de part et d'autre.

Le passage de la seconde position à la première est réalisé par une traction exercée sur le fil électrique 30 souple, ladite traction appliquée sur le fil entrainant en rotation le contact mobile. En effet, une traction exercée sur ledit fil en fin de déroulement crée un couple de rotation sur le corps 11 et entraine la rotation du contact mobile 10 de la position déconnectée à la position connectée au contact fixe 20. L'effort de traction exercé est supérieur à l'effort exercé par les moyens de blocage sur le contact mobile. L'ergot sort alors du bossage d'une des zones externes 14, le corps 11 pivote sur le second axe de rotation Z2 et l'ergot se positionne dans le bossage de la zone centrale 14.

Le passage de la première position à la seconde position dite repos se fera au plus tard lorsque le tambour aura parcouru ¼ de tour. En effet, la direction de la force exercée par le câble sera alors tangentielle au tambour ce qui aura pour effet d'accompagner le doigt vers sa position repos. L'ergot sort alors du bossage de la zone centrale 14, le corps 11 pivote sur le second axe de rotation Z2 et l'ergot se positionne dans l'un des bossages de la zone externe 14. Le corps du contact mobile est disposé de telle façon à être recouvert dès le premier tour de câble de telle façon à forcer la position du doigt au plus tard au premier tour de câble afin d'éviter que le doigt heurte une branche de l'étrier. Comme représenté sur la figure 1, le corps du tambour est ajouré pour noyer complètement le corps 11 du contact mobile et faire en sorte que l'axe du fil soit tangentiel à la surface du tambour, autrement dit perpendiculaire au rayon du tambour quand le fil est enroulé.

Une autre alternative pourra être avantageusement mise en oeuvre pour enrouler le câble sans que ce dernier soit tendu ni qu'une action soit requise sur le cliquet. Comme représenté sur la figure 10, le tambour possède deux gorges 101 placées de manière parallèle sur la surface externe du tambour 1. La longueur des gorges est sensiblement égale à la hauteur du tambour. Le corps du contact mobile comporte une barre transversale 102 de longueur au moins égale à la hauteur du tambour. La barre transversale 102 est destinée venir se placer dans une des deux gorges lorsque le corps du contact mobile est dans une position de repos. Les gorges seront assez profondes pour que la barre 102 ne dépasse pas de la surface du tambour. Ainsi, lors de l'enroulement du câble, lorsque le tambour aura parcouru un premier tour, le passage du câble sur la barre précipitera la rotation du doigt en position repos.

Selon le premier mode particulier de réalisation, le bloc de connexion 8 est maintenu en position fixe par une butée mécanique solidaire du demi-carter qui vient s'encastrer dans l'encoche 32 prévue à cet effet à l'arrière du bloc de connexion 8.

Selon le mode de réalisation principal, l'ordre d'ouverture et fermeture des zones de contact 131, 132, 133, et 231, 232, 233 est maitrisé. En effet, l'établissement des contacts électriques entre les zones de contact 131, 132, 133 du doigt 12 et les zones de contact 231, 232, 233 de la branche 25 de l'étrier 21 s'opère selon un ordre prédéfini. Comme représenté sur les figures 8B et 9, au moment de la connexion des contacts mobile 10 et fixe 20, la zone de contact 231 placée en périphérie extérieure de l'étrier 21 rentre dans un premier temps en contact avec la zone 131 du doigt 12 la plus proche du second axe Z2 de rotation. Dans un second temps, une zone contact 232 médiane de l'étrier 21 rentre en contact avec une zone de contact médiane 132 du doigt 12. L'ordre de coupure des contacts lors de la déconnexion des contacts mobile 10 et fixe 20 est inverse par rapport à l'ordre de fermeture. Ainsi, à titre d'exemple de réalisation, un conducteur de protection raccordé sur les zones contacts 131 et 231 serait connecté en premier et déconnecté en dernier afin d'assurer la sécurité électrique de la solution.

Grace au dispositif d'enroulement selon l'invention, l'ordre d'établissement et d'ouverture des contacts est maitrisé.

Le dispositif d'enroulement est avantageusement utilisé pour éviter les échauffements et risques d'incendie lors de l'alimentation des charges électriques de forte puissance. Il pourra notamment être utilisé pour la recharge d'un véhicule électrique.

## Revendications

1. Dispositif d'enroulement d'un fil électrique comprenant :
- un tambour (1) monté en rotation autour d'un premier axe de rotation (Z1) solidaire d'un bâti (5),
- un fil électrique (30) enroulé sur le tambour (1) et comportant une première extrémité mobile destinée à être enroulée et déroulée avec le fil et une seconde extrémité destinée à être connectée soit à au moins une charge électrique, soit à un réseau d'alimentation, via un bloc de connexion (8),
- des moyens interrupteurs destinés à couper une liaison électrique entre la première extrémité du fil électrique (30) et le bloc de connexion (8),
dispositif, **caractérisé en ce que** les moyens interrupteurs comportent :
- un contact fixe (20) solidaire du bâti (5) et étant connecté au bloc de connexion (8) ;
- un contact mobile (10) monté en rotation autour d'un second axe de rotation (Z2) solidaire du tambour (1) et étant connecté à la seconde extrémité du fil électrique, une rotation du contact mobile (10) entre au moins une position de fonctionnement déconnectée et une position de fonctionnement connectée au contact fixe (20) étant réalisée par une traction sur le fil électrique.

2. Dispositif d'enroulement selon la revendication 1, **caractérisé en ce que** le second axe de rotation (Z2) est décentré par rapport au premier axe de rotation (Z1)

3. Dispositif d'enroulement selon les revendication 1 ou 2, **caractérisé en ce que** le contact mobile (10) comporte un corps (11) apte à pivoter autour du second axe de rotation (Z2), la surface extérieure dudit corps comportant un point de connexion (18) décentrée du fil électrique (30) ; une traction exercée sur ledit fil en fin de déroulement créant un couple de rotation sur le corps (11) et entrainant la rotation du contact mobile (10) de la position de fonctionnement déconnectée à la position de fonctionnement connectée.

4. Dispositif d'enroulement .selon la revendication 3, **caractérisé en ce que** le corps (11) du contact mobile (10) comporte au moins deux zones de bossages (14) destinées à coopérer respectivement avec un moyen de blocage pour le maintien dudit contact mobile dans une des positions de fonctionnement.

5. Dispositif d'enroulement selon la revendication 4, **caractérisé en ce que** le moyen de blocage comporte un ergot (16) destiné à coopérer avec les zones de bossage (14) du corps (11) du contact mobile (10) pour son maintien dans une position de fonctionnement.

6. Dispositif d'enroulement selon la revendication 5, **caractérisé en ce que** le moyen de blocage comporte un moyen élastique (15) développant une force de poussée pour plaquer ledit ergot (16) contre une zone de bossage (14).

7. Dispositif d'enroulement selon l'une quelconque des revendications précédente, **caractérisé en ce que** le contact mobile (10) comporte un doigt de contact (12) sur lequel au moins deux zones de contact électrique isolées (131, 132) sont disposées parallèlement le long du doigt, ledit doigt étant perpendiculaire au second axe de rotation (Z2).

8. Dispositif d'enroulement selon la revendication 7, **caractérisé en ce que** le contact fixe comporte un étrier (21) en forme de U ayant des branches (24, 25) comprenant au moins deux zones de contact (231, 232), lesdites zones de contact étant destinées à venir collaborer avec lesdites au moins deux zones de contact électrique (131, 132) du doigt (12) dans la position de fonctionnement connectée.

9. Dispositif d'enroulement selon la revendication 8, **caractérisé en ce que** les branches (24, 25) de l'étrier en forme de U sont asymétriques.

## Patentansprüche

1. Aufrollvorrichtung eines Stromkabels, umfassend:
- eine Trommel (1), die drehbar um eine erste Drehachse (Z1) montiert ist, die mit einem Rahmen (5) fest verbunden ist,
- ein Stromkabel (30), das auf der Trommel (1) aufgerollt ist und ein erstes bewegliches Ende, das dazu bestimmt ist, mit dem Kabel auf- und abgewickelt zu werden, und ein zweites Ende aufweist, das dazu bestimmt ist, entweder an mindestens eine elektrische Last oder an ein Versorgungsnetz über einen Anschlussblock (8) angeschlossen zu werden.
- Schaltmittel, die dazu bestimmt sind, eine elektrischen Verbindung zwischen dem ersten Ende des Stromkabels (30) und dem Anschlussblock (8) zu unterbrechen,
Vorrichtung, die **dadurch gekennzeichnet ist, dass** die Schaltmittel Folgendes aufweisen:
- einen festen Kontakt (20), der mit dem Rahmen (5) fest verbunden ist und an den Anschlussblock (8) angeschlossen ist;
- einen beweglichen Kontakt (10), der drehbar um eine zweite Drehachse (Z2) montiert ist, die mit der Trommel (1) fest verbunden ist, und an das zweite Ende des Stromkabels angeschlossen ist, wobei eine Drehung des beweglichen Kontakts (10) zwischen mindestens einer getrennten Betriebsposition und einer Betriebsposition, die an den festen Kontakt (20) angeschlossen ist, durch ein Ziehen an dem Stromkabel durchgeführt wird.

2. Aufrollvorrichtung nach Anspruch 1, **dadurch gekennzeichnet, dass** die zweite Drehachse (Z2) gegenüber der ersten Drehachse (Z1) dezentriert ist.

3. Aufrollvorrichtung nach einem der Ansprüche 1 oder 2, **dadurch gekennzeichnet, dass** der bewegliche Kontakt (10) einen Körper (11) aufweist, der geeignet ist, um die zweite Drehachse (Z2) zu schwenken, wobei die Außenseite des Körpers einen dezentrierten Anschlusspunkt (18) des Stromkabels (30) aufweist; wobei ein Ziehen, das auf das Kabel am Ende des Abrollens ausgeübt wird, ein Drehmoment an dem Körper (11) erzeugt und die Drehung des beweglichen Kontakts (10) von der getrennten Betriebsposition zu der angeschlossenen Betriebsposition bewirkt.

4. Aufrollvorrichtung nach Anspruch 3, **dadurch gekennzeichnet, dass** der Körper (11) des beweglichen Kontakts (10) mindestens zwei Vorsprungbereiche (14) aufweist, die dazu bestimmt sind, jeweils mit einem Blockierungsmittel zum Halten des beweglichen Kontakts in einer der Betriebspositionen zusammenzuwirken.

5. Aufrollvorrichtung nach Anspruch 4, **dadurch gekennzeichnet, dass** das Blockierungsmittel einen Sporn (16) aufweist, der dazu bestimmt ist, mit den Vorsprungbereichen (14) des Körpers (11) des beweglichen Kontakts (10) für sein Halten in einer Betriebsposition zusammenzuwirken.

6. Aufrollvorrichtung nach Anspruch 5, **dadurch gekennzeichnet, dass** das Blockierungsmittel ein elastisches Mittel (15) aufweist, das eine Schubkraft entwickelt, um den Sporn (16) gegen einen Vorsprungbereich (14) zu drücken.

7. Aufrollvorrichtung nach einem der vorhergehenden Ansprüche, **dadurch gekennzeichnet, dass** der bewegliche Kontakt (10) einen Kontaktfinger (12) aufweist, auf dem mindestens zwei isolierte elektrische Kontaktbereiche (131, 132) parallel entlang dem Finger angeordnet sind, wobei der Finger senkrecht zu der zweiten Drehachse (Z2) ist.

8. Aufrollvorrichtung nach Anspruch 7, **dadurch gekennzeichnet, dass** der feste Kontakt einen U-förmigen Bügel (21) aufweist, der Zweige (24, 25) aufweist, die mindestens zwei Kontaktbereiche (231, 232) aufweisen, wobei die Kontaktbereiche dazu bestimmt sind, mit den mindestens zwei elektrischen Kontaktbereichen (131, 132) des Fingers (12) in der angeschlossenen Betriebsposition zusammenzuwirken.

9. Aufrollvorrichtung nach Anspruch 8, **dadurch gekennzeichnet, dass** die Zweige (24, 25) des U-förmigen Bügels asymmetrisch sind.

## Claims

1. Winding device for an electric wire comprising:
- a drum (1) mounted to rotate about a first rotation axis (Z1) secured to a frame (5),
- an electric wire (30) wound on the drum (1) and comprising a first mobile end intended to be wound and unwound with the wire and a second end intended to be connected either to at least one electrical load, or to a power supply network, via a connection block (8),
- switch means intended to cut an electrical link between the first end of the electric wire (30) and the connection block (8),
the device being **characterized in that** the switch means comprise:
- a fixed contact (20) secured to the frame (5) and being connected to the connection block (8);
- a mobile contact (10) mounted to rotate around a second rotation axis (Z2) secured to the drum (1) and being connected to the second end of the electric wire, a rotation of the mobile contact (10) between at least one disconnected operating position and an operating position connected to the fixed contact (20) being produced by a pull on the electric wire.

2. Winding device according to Claim 1, **characterized in that** the second rotation axis (Z2) is eccentric relative to the first rotation axis (Z1).

3. Winding device according to Claim 1 or 2, **characterized in that** the mobile contact (10) comprises a body (11) suitable for pivoting around the second rotation axis (Z2), the outer surface of said body comprising an eccentric point of connection (18) of the electric wire (30); a pull exerted on said wire at the end of unwinding creating a rotation torque on the body (11) and causing the mobile contact (10) to rotate from the disconnected operating position to the connected operating position.

4. Winding device according to Claim 3, **characterized in that** the body (11) of the mobile contact (10) comprises at least two boss zones (14) intended to cooperate respectively with locking means for keeping said mobile contact in one of the operating positions.

5. Winding device according to Claim 4, **characterized in that** the blocking means comprises a spigot (16) intended to cooperate with the boss zones (14) of the body (11) of the mobile contact (10) to keep it in an operating position.

6. Winding device according to Claim 5, **characterized in that** the blocking means comprises an elastic means (15) developing a thrust force to press said spigot (16) against a boss zone (14).

7. Winding device according to any one of the preceding claims, **characterized in that** the mobile contact (10) comprises a contact finger (12) on which at least two insulated electrical contact zones (131, 132) are arranged parallel along the finger, said finger being at right angles to the second rotation axis (Z2).

8. Winding device according to Claim 7, **characterized in that** the fixed contact comprises a U-shaped stirrup (21) having branches (24, 25) comprising at least two contact zones (231, 232), said contact zones being intended to collaborate with said at least two electrical contact zones (131, 132) of the finger (12) in the connected operating position.

9. Winding device according to Claim 8, **characterized in that** the branches (24, 25) of the U-shaped stirrup are asymmetrical.
